(19) Europäisches Patentamt
European Patent Office
Office européen des brevets

(11) Numéro de publication: **0 287 459 B1**

(12) # FASCICULE DE BREVET EUROPEEN

(45) Date de publication de fascicule du brevet: **07.01.93**

(51) Int. Cl.5: **C23F 11/08**, C09K 5/04, C23F 11/06

(21) Numéro de dépôt: **88400887.1**

(22) Date de dépôt: **13.04.88**

Le dossier contient des informations techniques présentées postérieurement au dépôt de la demande et ne figurant pas dans le présent fascicule.

(54) **Inhibiteurs de corrosion des aciers et compositions aqueuses d'halogénure de métal alcalin les contenant.**

(30) Priorité: **15.04.87 FR 8705374**

(43) Date de publication de la demande: **19.10.88 Bulletin 88/42**

(45) Mention de la délivrance du brevet: **07.01.93 Bulletin 93/01**

(84) Etats contractants désignés: **AT BE CH DE ES FR GB GR IT LI LU NL SE**

(56) Documents cités:
**DE-A- 1 936 031**
**US-A- 2 319 667**
**US-A- 2 394 758**
**US-A- 2 877 188**
**US-A- 4 160 740**

**PATENT ABSTRACTS OF JAPAN, vol. 9, no. 277 (C-311)[1994], 29 octobre 1985, page 38; & JP-A-60 118 785 (KAWASAKI JUKOGYO K.K.) 26-06-1985**

(73) Titulaire: **GAZ DE FRANCE**
**23, rue Philibert Delorme**
**F-75017 Paris(FR)**

(72) Inventeur: **Ben Hadid, Abderraouf**
**28 bis, rue de Capitaine Guynemer**
**F-93110 Rosny-Sous-Bois(FR)**
Inventeur: **Fiaud, Christian**
**11,rue du Temple**
**F-94100 Saint-Maur-Des-Fosses(FR)**
Inventeur: **Mezon, Jacques**
**65, rue Soeur Angèle**
**F-95210 Saint-Gratien(FR)**

(74) Mandataire: **Le Roux, Martine et al**
**Cabinet Beau de Loménie 55, rue d'Amsterdam**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

La présente invention a pour objet des inhibiteurs de corrosion des aciers et les compositions aqueuses d'halogénure de métal alcalin les contenant.

Elle concerne, plus particulièrement, des inhibiteurs de corrosion des aciers, en contact, en milieu anaérobie, avec des compositions aqueuses d'halogénure de métal alcalin et leur utilisation dans lesdites compositions.

Ces compositions aqueuses d'halogénure de métal alcalin sont du type de celles intervenant comme fluide de travail dans des dispositifs de pompe à chaleur à absorption haute température. L'incorporation des inhibiteurs de corrosion, selon l'invention, en leur sein leur confère des effets d'inhibition de la corrosion des surfaces métalliques internes desdits dispositifs.

Selon l'invention, on propose donc une solution au problème de la corrosion des aciers en contact, à haute température, avec des solutions aqueuses d'halogénure de métal alcalin concentrées.

Les inhibiteurs de corrosion selon l'invention interviennent efficacement avec des aciers au carbone ou faiblement alliés, de même qu'avec des aciers plus fortement alliés (aciers inoxydables, aciers au Ni ...).

Traditionnellement réservées à des applications à basse température, telles que la réfrigération et le conditionnement d'air, les pompes à chaleur à absorption offrent, à l'heure actuelle, des opportunités nouvelles en matière de revalorisation de l'énergie dans l'industrie. Elles permettent le transfert de chaleur d'un bas niveau thermique (50-80 °C) à un niveau supérieur (100 à 150 °C).

Les mélanges eau-halogénure de métal alcalin et plus particulièrement les mélanges eau-bromure de lithium, couramment utilisés dans les systèmes de réfrigération à absorption classique, sont tout à fait compatibles avec ces hautes températures de transfert, pourvu qu'ils soient mis en oeuvre à forte concentration en poids de sel (de l'ordre de 60 à 70 %) et à des températures de travail qui peuvent atteindre 220 °C. Dans ces conditions, lesdits mélanges sont très agressifs vis-à-vis des matériaux métalliques du système et la prévention de la corrosion devient un objectif technologique prioritaire.

Selon l'art antérieur, dans les machines à absorption traditionnelles, les mélanges eau-bromure de lithium n'opèrent pas à des températures supérieures à 160 °C et leur concentration en sel n'est pas supérieure à 60 %. Les risques de corrosion des matériaux métalliques, en contact avec de tels mélanges, sont limités par l'usage d'inhibiteurs de corrosion, tels que le chromate de lithium, le molybdate de lithium, le nitrate et le nitrite de lithium, le benzotriazole et ses dérivés, les polyalcools, le trioxyde d'arsenic, le trioxyde d'antimoine... Ces mélanges aqueux et des dispositifs les employant comme fluide de travail sont connus et notamment décrits dans les brevets US n° 3,609,086, US n° 4,019,992, dans les brevets JP 45-25954, 51-99455 et 60-232461.

Lesdits inhibiteurs de corrosion, selon l'art antérieur, présentent parfois, à plus haute température, des inconvénients qui en interdisent ou limitent l'utilisation. Ainsi, les polyalcools ne sont plus stables ; les chromates, nitrates, nitrites et molybdates se consomment rapidement et entraînent une aggravation de la corrosion localisée. Les autres inhibiteurs, qui seraient utilisables dans ces conditions plus sévères -température voisine de 220 °C et concentration en sel de l'ordre de 70 %- se sont révélés d'une efficacité moindre.

Selon l'invention, on propose donc de nouveaux inhibiteurs de corrosion, efficaces pour inhiber la corrosion des aciers, notamment des aciers au carbone ou faiblement alliés, en contact avec des compositions aqueuses d'halogénure de métal alcalin contenant jusqu'à 70 % en poids dudit halogénure de métal alcalin. Lesdits inhibiteurs selon l'invention sont efficaces dans ces conditions sévères et notamment jusqu'à des températures de l'ordre de 220 °C.

Il s'agit de mélanges ternaires, à action synergétique contenant en pourcentage molaire :

- de 62 à 98 % de base forte,
- de 0,23 à 9,5 % de trioxyde d'arsenic,
- de 1,45 à 33 % d'au moins un composé choisi parmi le benzotriazole, ses dérivés et leurs mélanges.

Selon l'invention, on a mis en évidence un effet de synergie propre à ce mélange des 3 constituants et plus particulièrement à l'association : trioxyde d'arsenic - benzotriazole et/ou ses dérivés.

Ledit mélange contient au moins une base forte. Il peut contenir un mélange de plusieurs bases fortes. Ceci permet de minimiser l'agressivité des mélanges eau-halogénure de métal alcalin, en leur conférant un caractère légèrement basique. Ladite ou lesdites bases fortes sont avantageusement choisies parmi la soude, la potasse ou la lithine (hydroxyde de lithium). Préférentiellement, on utilise la lithine.

Ledit mélange contient également du trioxyde d'arsenic et au moins un composé choisi parmi le benzotriazole, ses dérivés et leurs mélanges.

Lesdits dérivés du benzotriazole, utiles aux fins de l'invention, sont des composés chimiques stables dans les conditions de leur utilisation et notamment à des températures voisines de 220 °C.

Il s'agit avantageusement des composés de formule :

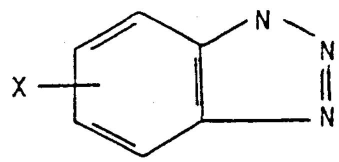

dans laquelle X représente un groupe méthyle, éthyle, phényle ou un halogène (Cl, Br, ...).

Lesdits mélanges ternaires contiennent avantageusement, en pourcentage molaire :

- de 80 à 98 % de base forte,
- de 0,23 à 4 % de trioxyde d'arsenic,
- de 1,45 à 17 % d'au moins un composé choisi parmi le benzotriazole, ses dérivés et leurs mélanges,

ou

- de 73 à 97 % de base forte,
- de 0,24 à 9 % de trioxyde d'arsenic,
- de 2 à 20 % d'au moins un composé choisi parmi le benzotriazole, ses dérivés et leurs mélanges.

Les mélanges ternaires selon l'invention, caractérisés par leurs compositions molaires données ci-dessus, permettent la préparation de solutions aqueuses d'halogénures de métal alcalin, contenant jusqu'à 70 % en poids dudit halogénure de métal alcalin et possédant jusqu'à 220 °C des propriétés inhibitrices satisfaisantes de la corrosion.

Un autre objet de la présente invention consiste en lesdites compositions aqueuses contenant une quantité efficace desdits mélanges ternaires.

C'est dans leur utilisation, à une certaine concentration, au sein de ces compositions que l'intérêt des mélanges ternaires selon l'invention (caractérisés par leur composition molaire en chacun des trois constituants : base forte - trioxyde d'arsenic - benzotriazole, un de ses dérivés ou leurs mélanges) est mis en évidence, de façon surprenante.

Lesdites compositions aqueuses peuvent être concentrées. Elles contiennent de 40 à 70 % en poids dudit halogénure de métal alcalin.

Généralement, le lithium est utilisé comme métal alcalin. Avantageusement, les compositions aqueuses selon l'invention sont des compositions de bromure de lithium.

De telles compositions sont couramment utilisées, comme précisé ci-dessus dans les dispositifs de pompe à chaleur à absorption.

Lesdites compositions contiennent donc, à titre d'agent inhibiteur de corrosion, une quantité efficace d'un mélange ternaire, caractérisé ci-dessus.

Elles contiennent de 0,04 à 0,2 mole/l de base forte.

Dans des conditions sévères d'utilisation -température voisine de 220 °C et forte teneur en sel, voisine de 70 %- elles contiennent avantageusement de 0,1 à 0,2 mole/l de base forte.

Ladite base forte ou le mélange desdites bases fortes intervient en une quantité suffisante pour l'obtention du résultat recherché, quant à l'alcalinité de la composition, mais en une quantité limitée. Des compositions trop basiques sont agressives et, en leur sein, on observe une accélération importante de la consommation du trioxyde d'arsenic. En l'absence d'autre inhibiteur de corrosion, le taux d'inhibition atteint avec la base forte ou le mélange de base forte est insuffisant.

L'utilisation de ladite ou desdites base(s) forte(s) avec du trioxyde d'arsenic ($As_2O_3$) et au moins un composé triazole (BTA et/ou ses dérivés) permet, selon l'invention, d'atteindre des résultats particulièrement intéressants. Lesdits composés $As_2O_3$, BTA... sont connus en tant qu'agents inhibiteurs de corrosion. Selon l'invention, on a mis en évidence l'intérêt qu'il y a à les utiliser conjointement dans certaines proportions.

Les compositions selon l'invention contiennent de $5.10^{-4}$ à $4,5.10^{-3}$ mole/l de trioxyde d'arsenic et de 0,003 à 0,02 mole/l d'au moins un composé choisi parmi le benzotriazole, ses dérivés et leurs mélanges, préférentiellement de 0,005 à 0,01 mole/l.

Lesdits inhibiteurs doivent intervenir en une quantité suffisante pour être efficace le plus longtemps possible. Il convient notamment d'utiliser le benzotriazole et ses composés, en excès, lesdits produits perdant de l'efficacité au cours du temps. Ce phénomène est probablement dû à leur décomposition lente. Toutefois, il convient que les quantités employées soient solubles dans les compositions selon l'invention.

Le mélange ternaire des inhibiteurs de corrosion selon l'invention est avantageusement un mélange de lithine, de trioxyde d'arsenic et de benzotriazole.

Les mélanges ternaires d'inhibiteurs selon l'invention sont particulièrement efficaces, comme cela

ressort du tableau présenté ci-après.

Ils permettent l'utilisation de compositions aqueuses concentrées en halogénure de métal alcalin, dans des conditions sévères de température.

En outre, on a noté, au sein des compositions selon l'invention que la présence de trioxyde d'arsenic a un effet favorable sur la stabilité dans le temps du benzotriazole et/ou de ses dérivés.

Les avantages des mélanges et compositions selon l'invention seront mieux compris à la lecture des résultats d'essais présentés ci-après.

L'efficacité et la stabilité thermique d'un mélange ternaire d'agents inhibiteurs de corrosion selon l'invention ont été contrôlées.

Des essais de corrosion de longue durée ont été effectués dans des autoclaves en verre de 1 litre de volume utile, équipés de réfrigérants métalliques, refroidis par une circulation d'eau. Ils sont maintenus à une pression de 2 bar à l'aide d'un régulateur-déverseur et sous atmosphère inerte par balayage d'azote.

Pour chaque essai, trois échantillons métalliques (15CD405 : acier faiblement allié) de dimensions 37 mm x 15 mm x 3 mm ont été immergés dans des solutions inhibées contenant 70 % en poids de LiBr et maintenues à 220 °C. Les échantillons sont suspendus à l'aide d'une tige en verre et espacés par des entretoises également en verre.

La vitesse de corrosion pour chaque inhibiteur ou mélange d'inhibiteurs est déterminée à partir de la mesure de la perte de masse des échantillons (la valeur retenue, présentée dans le tableau 1 correspond pour chaque essai à la perte de masse moyenne de trois échantillons).

TABLEAU 1 - Résultats des essais de corrosion généralisée d'un acier faiblement allié (15CD4-05) dans un mélange $H_2O$-LiBr (70 % en poids) à T = 220°C et P = 2 atm.

| Inhibiteurs (% en poids) | LiOH (% en poids) | Durée (H) | Vitesse corrosion (mg/dm².j) | Taux inhib. (%) |
|---|---|---|---|---|
| (sans inhibiteur) | 0 | 558 | 960 | 0 |
| solution basique | 0,2 | 558 | 120 | 87 |
| BTA (0,21 %) | 0,2 | 427 | 54 | 94 |
| BTA (0,21 %) | 0,2 | 1000 | 248 | 74 |
| $As_2O_3$ (0,07 %) | 0,2 | 331 | 29 | 97 |
| $As_2O_3$ (0,07 %) | 0,2 | 1000 | 30 | 97 |
| $As_2O_3$ (0,07 %) | | 331 | 12 | 98,7 |
| + | 0,2 | | | |
| BTA (0,06 %) | | 1000 | 18 | 98,1 |

BTA : benzotriazole

Taux d'inhibition (%) : $\frac{v_0 - v_1}{v_0} \times 100$,

$v_1$ et $v_0$ étant respectivement les vitesses de corrosion avec et sans inhibiteur

La comparaison des différents résultats de ces essais de corrosion permet d'évaluer le pouvoir anti-corrosion synergétique d'un mélange ternaire selon l'invention par rapport à celui de chacun de ses constituants : LiOH-$As_2O_3$-BTA.

L'efficacité dudit mélange est largement supérieure à celle du benzotriazole seul et environ deux fois plus élevée que celle du trioxyde d'arsenic dans les mêmes conditions.

De plus, il ressort de la comparaison des lignes 4 et 8 dudit tableau que la présence du trioxyde d'arsenic a un effet favorable sur la stabilité dans le temps du benzotriazole.

**Revendications**

**1.** A titre d'agent inhibiteur de corrosion des aciers en contact avec des compositions aqueuses d'halogénure de métal alcalin, les mélanges ternaires, à action synergétique contenant en pourcentage molaire :
- de 62 à 98 % de base forte,
- de 0,23 à 9,5 % de trioxyde d'arsenic,
- de 1,45 à 33 % d'au moins un composé choisi parmi le benzotriazole, ses dérivés et leurs mélanges.

**2.** Mélanges ternaires selon la revendication 1 contenant, en pourcentage molaire :
- de 80 à 98 % de base forte,
- de 0,23 à 4 % de trioxyde d'arsenic,
- de 1,45 à 17 % d'au moins un composé choisi parmi le benzotriazole, ses dérivés et leurs mélanges.

**3.** Mélanges ternaires selon la revendication 1, contenant en pourcentage molaire :

- de 73 à 97 % de base forte,
- de 0,24 à 9 % de trioxyde d'arsenic
- de 2 à 20 % d'au moins un composé choisi parmi le benzotriazole, ses dérivés et leurs mélanges.

**4.** Mélanges ternaires selon l'une quelconque des revendications 1 a 3, caractérisés en ce que ladite base forte est la lithine.

**5.** Compositions aqueuses d'halogénure de métal alcalin, utiles notamment comme fluide de travail dans des dispositifs de pompe à chaleur à absorption haute température, caractérisées en ce qu'elles contiennent, à titre d'agent inhibiteur de corrosion, une quantité efficace d'un mélange ternaire selon l'une quelconque des revendications 1 à 4.

**6.** Compositions selon la revendication 5, caractérisées en ce qu'elles contiennent de 40 à 70 % en poids de l'halogénure de métal alcalin.

**7.** Compositions selon l'une quelconque des revendications 5 ou 6, caractérisées en ce que ledit halogénure de métal alcalin est du bromure de lithium.

**8.** Compositions selon l'une quelconque des revendications 5 à 7, caractérisées en ce qu elles contiennent 0,04 à 0,2 mole/l de base forte, $5.10^{-4}$ à $4{,}5.10^{-3}$ mole/l de trioxyde d'arsenic et 0,003 à 0,02 mole/l d'au moins un composé choisi parmi le benzotriazole, ses dérivés et leurs mélanges.

**9.** Compositions selon la revendications 8, caractérisées en ce qu'elles contiennent 0,1 à 0,2 mole/l de base forte.

**10.** Compositions selon l'une des revendications 8 ou 9, caractérisées en ce qu'elles contiennent 0,005 à 0,01 mole/l d'un composé choisi parmi le benzotriazole, ses dérivés et leurs mélanges.

**11.** Compositions selon l'une quelconque des revendications 5 à 10, caractérisées en ce que les constituants dudit mélange ternaire sont la lithine, le trioxyde d'arsenic et le benzotriazole.

**Claims**

**1.** As corrosion-inhibiting agent of steels in contact with aqueous compositions of alkali metal halide, the ternary mixtures with a synergistic action containing in molar percentages :
- from 62 to 98 % of strong base,
- from 0.23 to 9.5% of arsenic trioxide,
- from 1.45 to 33 % of at least one compound chosen from among benzotriazole, its derivatives and their mixtures.

**2.** Ternary mixtures according to claim 1 containing in molar percentages :
- from 80 to 98 % of strong base,
- from 0.23 to 4 % of arsenic trioxide,
- from 1.45 to 17 % of at least one compound chosen from among benzotriazole, its derivatives and their mixtures.

**3.** Ternary mixtures according to claim 1 containing in molar percentages :
- from 73 to 97 % of strong base,
- from 0.24 to 9 % of arsenic trioxide,
- from 2 to 20 % of at least one compound chosen from among benzotriazole, its derivatives and their mixtures.

**4.** Ternary mixtures according to any one of claims 1 to 3, characterized in that the said strong base is lithium hydroxide.

**5.** Aqueous compositions of alkali metal halide useable in particular as working fluid in high temperature absorption heat pump systems, characterized in that they contain an effective amount of a ternary

mixture according to any one of claims 1 to 4 as corrosion-inhibiting agent.

**6.** Compositions according to claim 5, characterized in that they contain from 40 to 70 % by weight of the alkali metal halide.

**7.** Compositions according to any one of claims 5 or 6, characterized in that the said alkali metal halide is lithium bromide.

**8.** Compositions according to any one of claims 5 to 7, characterized in that they contain 0.04 to 0.2 mole/l of strong base, $5.10^{-4}$ to $4.5.10^{-3}$ mole/l of arsenic trioxide and 0.003 to 0.02 mole/l of at least one compound chosen from among benzotriazole, its derivatives and their mixtures.

**9.** Compositions according to claim 8, characterized in that they contain 0.1 to 0.2mole/l of strong base.

**10.** Compositions according to one of claims 8 or 9, characterized in that they contain 0.005 to 0.01 mole/l of a compound chosen from among benzotriazole, its derivatives and their mixtures.

**11.** Compositions according to any one of claims 5 to 10, characterized in that the components of the said ternary mixture are lithium hydroxide, arsenic trioxide and benzotriazole.

**Patentansprüche**

**1.** Ternäre Mischungen mit synergetischer Wirkung, enthaltend:
- 62 bis 98 Mol-% starke Base,
- 0,23 bis 9,5 Mol-% Arsentrioxid,
- 1,45 bis 33 Mol-% mindestens einer Verbindung, ausgewählt aus Benzotriazol, Derivaten und Mischungen davon.

als Korrosionshemmer von mit wässerigen Alkalimetallhalogenidzusammensetzungen in Kontakt befindlichen Stählen.

**2.** Ternäre Mischungen nach Anspruch 1, enthaltend:
- 80 bis 98 Mol-% starke Base,
- 0,23 bis 4 Mol-% Arsentrioxid,
- 1,45 bis 17 Mol-% mindestens einer Verbindung, ausgewählt aus Benzotriazol, Derivaten und Mischungen davon.

**3.** Ternäre Mischungen nach Anspruch 1, enthaltend:
- 73 bis 97 Mol-% starke Base,
- 0,24 bis 9 Mol-% Arsentrioxid,
- 2 bis 20 Mol-% mindestens einer Verbindung, ausgewählt aus Benzotriazol, Derivaten und Mischungen davon.

**4.** Ternäre Mischungen nach einem der Ansprüche 1 bis 3, dadurch gekennzeichnet, daß die starke Base Lithin ist.

**5.** Wässerige Alkalimetallhalogenidzusammensetzungen zur Verwendung insbesondere als Arbeitsfluid in Hochtemperatur-Absorptionswärmepumpenvorrichtungen, dadurch gekennzeichnet, daß sie als Korrosionshemmer eine wirksame Menge einer ternären Mischung nach einem der Ansprüche 1 bis 4 enthalten.

**6.** Zusammensetzungen nach Anspruch 5, dadurch gekennzeichnet, daß sie 40 bis 70 Gew.% Alkalimetallhalogenid enthalten.

**7.** Zusammensetzungen nach einem der Ansprüche 5 oder 6, dadurch gekennzeichnet, daß das Alkalimetallhalogenid Lithiumbromid ist.

**8.** Zusammensetzungen nach einem der Ansprüche 5 bis 7, dadurch gekennzeichnet, daß sie 0,04 bis 0,2 Mol/l starke Base, $5.10^{-4}$ bis $4.5.10^{-3}$ Mol/l Arsentrioxid und 0,003 bis 0,02 Mol/l mindestens einer

Verbindung, ausgewählt aus Benzotriazol, Derivaten und Mischungen davon, enthalten.

**9.** Zusammensetzungen nach Anspruch 8, dadurch gekennzeichnet, daß sie 0,1 bis 0,2 Mol/l starke Base enthalten.

**10.** Zusammensetzungen nach einem der Ansprüche 8 oder 9, dadurch gekennzeichnet, daß sie 0,005 bis 0,01 Mol/l einer Verbindung, ausgewählt aus Benzotriazol, Derivaten und Mischungen davon, enthalten.

**11.** Zusammensetzungen nach einem der Ansprüche 5 bis 10, dadurch gekennzeichnet, daß die Bestandteile der ternären Mischung Lithin, Arsentrioxid und Benzotriazol sind.